# EUROPEAN PATENT SPECIFICATION

(11) **EP 1 290 360 B1**
(45) Date of publication and mention of the grant of the patent: **23.03.2005**
(21) Application number: 01947736.3
(22) Date of filing: 15.06.2001
(51) Int. Cl.: F16H 7/12, F02B 67/06

(54) **TIMING BELT AUTOTENSIONER WITH AN ANTI-TOOTH SKIP MECHANISM**
AUTOMATISCHE ZAHNRIEMENSPANNVORRICHTUNG MIT ANORDNUNG ZUR VERMEIDUNG DES ÜBERSPRINGEN VON ZAHNEN
TENDEUR AUTOMATIQUE DE COURROIE DE DISTRIBUTION DOTE D'UN MECANISME DESTINE A EMPECHER LA COURROIE DE SAUTER DES DENTS

(30) Priority: 16.06.2000 US 213802 P
(43) Date of publication of application: 12.03.2003
(73) Proprietor: Gibson, Fabian W., 114 24 Stockholm (SE)
(72) Inventor: Gibson, Fabian W., 114 24 Stockholm (SE)
(74) Representative: De Hoop, Eric
(86) International application number: PCT/IB2001/001268
(87) International publication number: WO 2001/096763

(56) References cited:
- WO-A-00/61969
- DE-A- 3 433 004
- DE-A- 4 301 850
- GB-A- 254 048
- US-A- 4 923 435
- US-A- 5 730 673

## Description

### Background of the Invention.

This invention relates to the field of belt tensioners and belt tensioner systems. More particularly, the present invention relates to improvements in both mechanical type and hydraulic type belt tensioners for use with a camshaft belt drive system in automotive engine applications and the like.

A timing belt trained about two cooperating pulleys is well-known in the art of tension transmitting assemblies. There are economical advantages to the aforementioned when compared with other types of assemblies, specifically meshing gear assemblies. It is known to use an automatic tensioner in conjunction with a synchronous or timing belt drive system in order to compensate for tension variations in the belt. These variations are commonly attributable to dynamic effects such as cyclic torque variations and thermal effects that introduce changes in the length of a timing belt drive.

A tensioner is located on the normally slack side of the belt span in a belt drive system. Tensioner design is typically divided into two groups: mechanical tensioners, relying on coulomb friction as means to generate damping; and second, hydraulic tensioners, generally having a piston arrangement with a known leak-through and a one-way valve to create an asymmetrical damping which is proportional to speed. While these types of tensioners are designed to accommodate cyclic torque variations and thermal effects in a belt drive system by controlling belt tension at the slack side of the belt span, such tensioners are not designed to accommodate extreme torque reversal situations (kickback), such as engine backfiring or engine rotation in reverse (e.g., an automobile going backward while in forward gear with the clutch engaged).

In such extreme torque reversal situations, the slack side of the belt drive system becomes the tight side. The tight belt tension, on the normally slack side, causes the tensioner device to respond to the kickback and rapidly decrease belt tension by moving the pulley and its related pivot-arm away from the belt to slacken the tight side of the belt span. If the pulley movement is extreme, it can over-slacken the belt and result in tooth jump or ratcheting as the slackened belt enters the crank pulley or cam shaft pulleys. Tooth jump or ratcheting is deleterious to the operation of an engine as synchronization of the pulleys is lost.

Some tensioners have a ratchet and pawl mechanism attached to the tensioner's pivot arm to eliminate tensioner kickback and avoid tooth jump or ratcheting. United States Patent No. 4,299,584 discloses a ratchet operative with a leaf-spring pawl that allows some compliance at kickback by permitting the leaf-spring to deflect slightly. United States Patent No. 4,634,407 discloses a timing belt autotensioner as described in the preamble of claim 1 and teaches a ratchet and pawl mechanism where the ratchet operates as a one-way clutch that fixes the position of a pivot-arm such that the tensioner cannot operate to slacken the belt.

However, a common problem of ratchet/pawl devices is that the tensioner must operate primarily as a fixed idler in one direction as the ratchet mechanism limits the motion of the tensionerpivot-arm. In other words, the tensioner pivot-arm is unable to function in a direction that would allow the belt to be slackened. Under this condition, belt tooth failure and noise is reintroduced into the belt drive system when the belt cannot be at least partially slackened.

United States Patent No. 5,591,094 teaches an adjustable stop spaced at a distance from the pivot-arm when the pulley is biased in a pressing engagement against a static belt The spacing is pre-determined to allow pivot-arm movement in a direction to slacken the belt while also preventing belt teeth from becoming disengaged from a toothed pulley (i.e., tooth jump) in an extreme torque reversal situation. The problem with an adjustable stop of this nature is that its distance from the pivot-arm is determined by compensation for the thermal effects of a hot engine. Each component of the belt drive system, however, leaves space for simultaneous tensioner arm vibration. In practice, this distance is large enough to allowtoothjump, especially under conditions such as low temperature and when at least one of the belt and pulleys is covered with a coating of ice.

### Summary of the Invention.

The invention provides a timing belt autotensioner as described in claim 1. Preferred embodiments are described in claims 2-9.

The new autotensioners comprise mechanisms actuated by the reversal of movement direction of the timing belts. Such a reversal of belt movement direction, normally a very rare occurrence, usually occurs during a short period of time, after which the belt returns to its normal forward or preferred movement. Each of the four mechanisms disclosed below, upon actuation by reverse belt movement, causes the autotensioner pulley axis of rotation to move in a direction that tightens the belt during reverse movement of the belt. Mechanisms are disclosed below that apply to autotensioners which have a trailing or leading geometry relative to the belt. Applied to autotensioners engaging the slack span of the belt, the mechanisms almost instantly tighten the belt in response to the reversal of belt direction. While disclosed for an automotive application, the invention is useful for any toothed belt applications where skipping or jumping of the belts over toothed gears would be deleterious to the operation of the machines.

### Brief Description of the Drawings.

The novel features which are believed to be characteristic of the present invention, as to its structure, organization, use and method of operation, together with further objectives and advantages thereof, will be better understood from the following drawings in which a presently preferred embodiment of the invention will now be illustrated by way of example. It is expressly understood, however, that the drawings are for the purpose of illustration and description only and are not intended as a definition of the limits of the invention. Embodiments of this invention will now be described by way of example in association with the accompanying drawings in which:
FIG. 1 is a side elevational view of a timing belt drive system;
FIG. 2 is a side elevational view of a first embodiment of the tensioning device of the present invention;
FIG. 3 is a side elevational view of a second embodiment of the tensioning device of the present invention;
FIG. 4 is a side elevational view of a third embodiment of the tensioning device of the present invention; and
FIG. 5 is a side elevation of an embodiment of a tensioning device not forming part of the present invention.

### Detailed Description of the Preferred Embodiments.

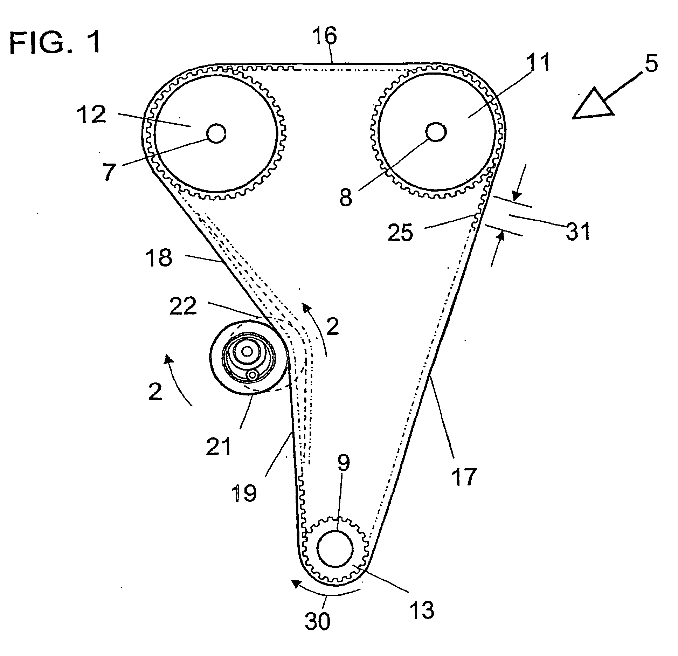

Reference will now be made to FIGs. 1 through 5.

FIG. 1 is a side elevational view of a synchronous timing belt drive 5 shown with a toothed belt comprising spans 16, 17, 18 and 19. Teeth 25, located on the interior periphery of the belt, are spaced at multiple pitch 31. The belt is entrained and tensioned around toothed pulleys 11, 12 and 13. The pulleys are illustrated as a camshaft drive of an automotive engine design that includes two exterior toothed cam pulleys 11, 12 and an exterior toothed crankshaft pulley 13. A belt-tensioning device 21 is mounted in connection with these pulleys such that it is operative in conjunction with the timing belt drive 5. As the engine operates over a range of RPM's, the drive camshaft pulleys 11, 12 introduce cyclic torque variations, which cause dynamic belt tension variations in belt spans 16 through 19. The tensioning device 21 is intended to compensate for torque variations, thermal growth when the engine is running, and stretch and wear of the belt which occurs during the life span of the drive 5.

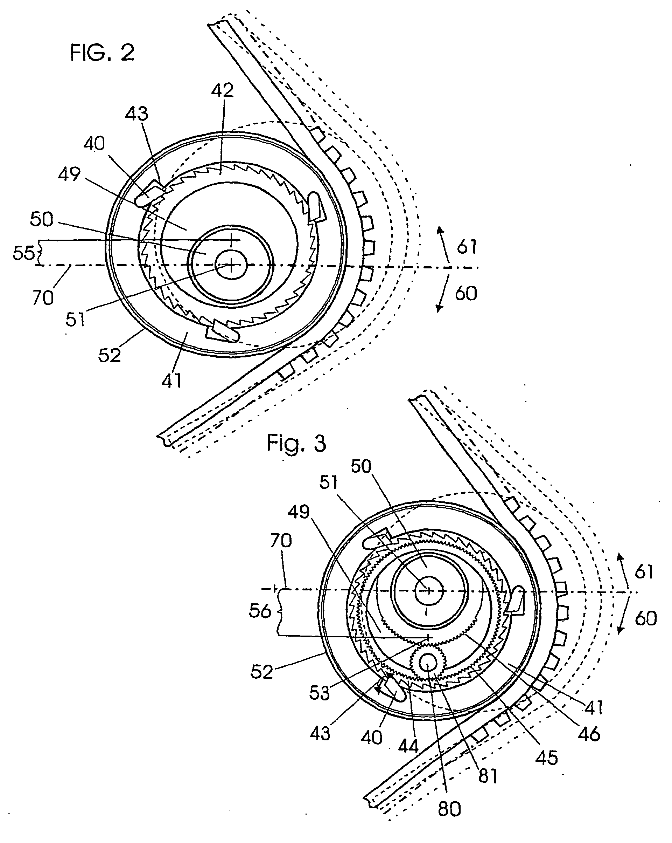

FIG. 2 illustrates a first embodiment of the present invention. The belt tensioner 21 is mounted on the engine via a pivot shaft 50 having a pivotal eccentric arm 49 to which a predetermined torque is applied, usually via a spring arrangement (not shown here). This torque generates a predetermined belt force which is transmitted to the belt via a pulley 52 attached to eccentric arm 49 by any means as is apparent to one skilled in the art, and generally through a bearing (not shown).

The tensioning device as shown in Fig. 2 is a trailing type configuration. The center 53 of arm structure 49 is located above line 70 throughout its operational range. Line 70 represents the over-center position of pulley 52 with respect to the pivot shaft 50. A ratchet wheel 42 is attached to arm structure 49. A plurality of pawls 40, located in pockets within the housing structure 41, and attached to pulley 52, bias the ratchet wheel 42 to form a one-way clutch and permit the unrestricted rotation of pulley 52 in the counterclockwise rotational direction of the drive 5 as depicted by arrow 61. In the event of a clockwise rotational direction, depicted by arrow 60 and which generally occurs under kickback and rollback conditions, the pawls 40 engage ratchet wheel 42 locking the pulley 52 and eccentric arm structure 49 together. This generates frictional torque between the belt 18 and pulley 52 in the direction of arrow 60. The torque upsets the abnormal belt force caused by the belt reversal. Using an existing tensioner device typical of the prior art, pulley 52 is normally pushed in an outward belt direction as the belt force, in conjunction with the arm length 55, generates an opposing torque which overcomes the spring torque applied to the eccentric arm 49, slackening the belt, and, in turn, potentially creating tooth jump. When using the tensioning device of the present invention, the belt 18 causes engagement of the ratchet 40, 41, 42 generating torque and moving the pulley 52 toward the belt, thus increasing the belt tension temporarily on the slack side and preventing tooth jump.

FIG. 3 is an enlarged view of the tensioning device of FIG. 1 and illustrates a second embodiment of the present invention. The tensioner 21 functions in the same manner as explained above. The tensioner as shown in FIG. 3 is a leading type configuration. The center 53 of arm structure 49 is located below the line 70 throughout its operational range. A ratchet wheel 44 is pivotally mounted on the cylindrical surface of the eccentric arm 49. A plurality of pawls 40, located in pockets within housing structure 41, attached to pulley 52 bias the ratchet wheel 44 and permit the unrestricted rotation of pulley 52 in the counterclockwise rotational direction, depicted by arrow 61 of drive 5. In the event of a clockwise rotational direction, depicted by arrow 60 and which generally occurs during kickback and rollback conditions, the pawls 40 engage ratchet wheel 44 enabling rotation of ratchet wheel 44 together with the pulley 52. The ratchet wheel 44 is meshed with gear 81 through teeth 45 on the inside of the volute. Gear 81 is pivotally mounted on a support structure 80, and is attached to the pivot structure 50 via a member not shown here for clarity. Thus, pivot structure 80 is fixed. Gear 81 is meshed with teeth 46 which are part of the eccentric arm 49. This gear train results in the eccentric arm 49 rotating toward the belt and generating an opposing torque. This opposing torque overcomes the belt force generated torque resulting from the clockwise rotational direction of the drive 5 (depicted by arrow 60), and increases the belt tension which, in turn, prevents tooth jump.

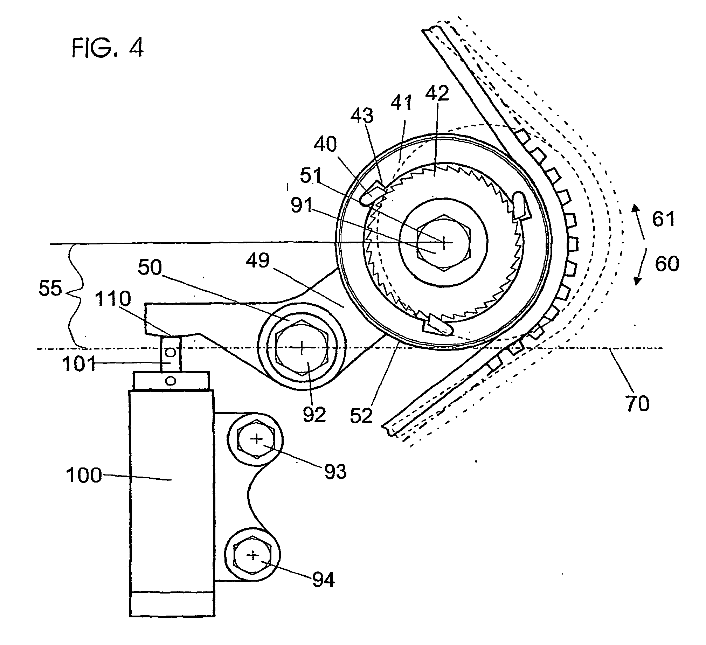

FIG. 4 illustrates a third embodiment of the present invention. The belt tensioner comprises a pulley 52, an eccentric arm structure 49, a hydraulic actuator unit 100, mounted on an engine via a pivot shaft 50 and bolts 93, 94. Pulley 52 is attached to the eccentric arm structure 49 through a bearing fixed to the arm structure 49 via bolt 91. The arm structure 49, pivotally trained about pivot shaft 50, allows the pulley 52 to rotate eccentrically around the center of pivot shaft 50. Hydraulic actuator 100 exerts a known force at point 110 generating a predetermined torque that is transferred to arm structure 49 in conjunction with arm length 55. This generates a predetermined belt force that is transmitted to the belt via pulley 52.

The tensioner shown in FIG. 4 is a trailing type configuration. The center of pulley 52 is located above line 70 throughout its operational range. Line 70 represents the over center position of the pulley 52 with respect to the pivot shaft 50. A ratchet wheel 42 is attached to the arm structure 49. A plurality of pawls 40, located in pockets within housing structure 41, attached to pulley 52 bias the ratchet wheel 42 and permit the unrestricted rotation of pulley 52 in the counterclockwise rotational direction of the drive 5 depicted by arrow 61. In the event of clockwise rotational direction, depicted by arrow 60 and which occurs during kickback and rollback conditions, the pawls 40 engage ratchet wheel 42 locking the pulley 52 and eccentric arm structure 40 together. This generates a frictional torque between the belt 18 and pulley 52 in the direction of arrow 60. The torque upsets the abnormal belt force caused by the belt reversal, moves the pulley 52 toward the belt increasing the belt tension temporarily, and, in turn, prevents tooth jump.

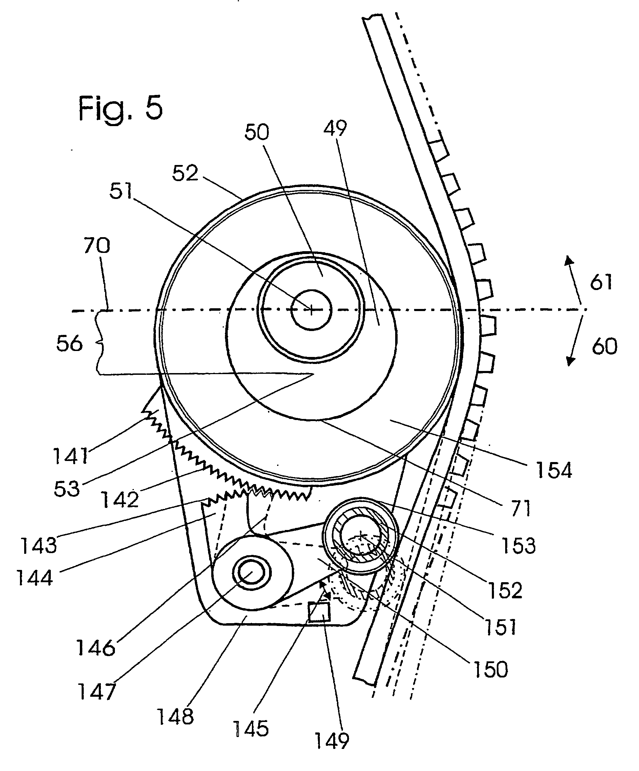

In FIG. 5. a belt tensioner 21, not forming part of the present invention, is mounted on the engine via a pivot shaft 50 and has a pivotal eccentric arm structure 49 to which a predetermined torque is applied usually via a spring arrangement (not shown here). This generates a predetermined belt force which is transmitted into the belt via a pulley 52 attached to eccentric arm structure 49 through a bearing usually of the type known as ball or roller (not shown here). The tensioner configuration shown is of the leading type, wherein the center 53 of arm structure 49 is below the line 70 throughout its operational range as above. A second pivotal structure is mounted to the base plate 148 of the tensioner, comprised of a second eccentric arm structure 150 and pulley 153. Attached to the arm structure 150 is pawl 144 which at its tip has a gear mesh 143. Within pulley 153 is a one-way clutch 152 biasing the arm structure to permit free rotation of the pulley 153 when the belt moves normally in direction 61. When the engine kicks back or roll back occurs, the belt changes direction to 60.

The one-way clutch 152 senses this change of direction and locks pulley 153 and arm structure 150 firmly together. This causes the arm structure 150 to rotate in the direction shown by arrow 145. Pawl 144 rotates with the arm 150 resulting in the gear mesh 143 engaging mesh 142 which is attached to the first pivotally mounted eccentric arm structure 49. This gearing results in the eccentric arm structure 49 rotating toward the belt and generating an opposing torque that overcomes the belt force generated torque due to the abnormal direction of the drive 5 depicted by arrow 60, thus increasing the belt tension and preventing tooth jump. A stop 149 prevents over centering of the second arm structure 150.

Throughout this specification, unless the context requires otherwise, the word "comprise," and variations such as "comprises" or "comprising," will be understood to imply the inclusion of a stated integer or step or group of integers or steps but not to the exclusion of any other integer or step or group of integers or steps. The ratchet and pawl mechanisms forming one-way clutches are to be understood as including equivalents such as spring clutches, sprag clutches and roller ramp clutches.

## Claims

1. A timing belt autotensioner comprising first movable means (52) contactable with a timing belt (18) and in response to the direction of movement of the timing belt movable relative to a first location (55), second movable means (49) supporting the first movable means and first location, said second movable means movable relative to a second location (51), and said second location spaced from the first location,
**characterized by** one-way engagement means (40) adapted to remain disengaged in response to movement of the timing belt in a preferred direction (61) and to engage in response to movement of the timing belt in the other direction (60), said one-way engagement causing engagement of the first movable means with the second movable means whereby the second movable means moves the first location and first movable means toward the timing belt.

2. The timing belt autotensioner of claim 1 wherein the first movable means comprises a pulley (52) contactable with the timing belt (18), said pulley rotatable about the first location comprising a first axis (53) at the pulley center, and the second movable means comprises an eccentric arm structure (49) supporting the pulley about the first axis and rotatable about the second location comprising a second axis (51), said second axis being spaced from the first axis,
**characterized by** one-way engagement means (40) adapted to remain disengaged with rotation of the pulley in a preferred direction and to engage with rotation of the pulley in the other direction, said one-way engagement causing engagement of the pulley with the eccentric arm structure whereby the eccentric arm structure moves the first axis of rotation and pulley toward the timing belt.

3. The timing belt autotensioner of claim 1 wherein the first movable means comprises a pulley (52) rotatable about the first location comprising a first axis (53) and adapted to contact a timing belt (18), and the second movable means comprises an eccentric arm structure (49) rotatable about the second location comprising a second axis (51) spaced from the first axis, said eccentric arm structure supporting the pulley about the first axis and adapted to urge the first axis and pulley toward the timing belt during a preferred rotation of the pulley,
**characterized by** a one-way clutch (40) between the pulley and eccentric arm structure, said one-way clutch engageable in response to the other rotation of the pulley thereby rotating the eccentric arm structure to move the first axis and pulley toward the timing belt.

4. The timing belt autotensioner of claim 1 wherein the first movable means comprises a pulley (52) rotatable about the first location comprising a first axis (53) and adapted to contact a timing belt, and the second movable means comprises an eccentric arm structure (49) rotatable about the second location comprising a second axis (51) spaced from the first axis, said eccentric arm structure supporting the pulley about the first axis, and adapted to urge the first axis and pulley toward the timing belt during a preferred rotation of the pulley,
**characterized by** a one-way clutch (40) and gear train (81) between the pulley and eccentric arm structure, said one-way clutch and gear train engageable in response to the other rotation of the pulley thereby causing the gear train to rotate the eccentric arm structure to move the first axis and pulley toward the timing belt.

5. The timing belt autotensioner of claim 4 **characterized in that** the one-way clutch and gear train comprises at least one pawl and ratchet wheel (44), said ratchet wheel including a first gear (45),
a second gear (81) meshed with the first gear and rotatable about a fixed third axis (80), and gear teeth (46) on the eccentric arm structure, said gear teeth meshed with the second gear.

6. The timing belt autotensioner of claim 1 wherein the first movable means comprises a pulley (52) rotatable about the first location comprising a first axis (51) and adapted to contact a timing belt (18), and the second movable means comprises an eccentric arm structure (49) rotatable about the second location comprising a second axis (92) spaced from the first axis, said eccentric arm structure supporting the pulley about the first axis, and hydraulic means (100) adapted to urge the first axis and pulley toward the timing belt during a preferred rotation of the pulley,
**characterized by** a one-way clutch (40) between the pulley and eccentric arm structure, and said second axis being spaced beyond the periphery of the pulley, said one-way clutch engageable in response to the other rotation of the pulley thereby rotating the eccentric arm structure to move the first axis and pulley toward the timing belt and the eccentric arm structure away from the hydraulic means.

7. The timing belt autotensioner of claim 6 **characterized in that** the eccentric arm structure engages (110) a hydraulic actuator.

8. The timing belt autotensioner of claim 3 or 7 **characterized in that** the one-way clutch is a ratchet comprising at least one pawl (40) and a ratchet wheel (42).

9. The timing belt autotensioner of any one of the claims 3-7 **characterized in that** the one-way clutch is diametrically less than the diameter of the pulley.

## Patentansprüche

1. Automatische Zahnriemenspannvorrichtung umfassend mit einem Zahnriemen (18) in Kontakt zu bringende erste bewegliche Mittel (52), die als Reaktion auf die Bewegungsrichtung des Zahnriemens bezüglich einer ersten Stelle (55) beweglich sind, die ersten beweglichen Mittel und die erste Stelle unterstützende zweite bewegliche Mittel (49), wobei die zweiten beweglichen Mittel bezüglich einer zweiten Stelle (51) beweglich sind, und die zweite Stelle auf Abstand von der ersten Stelle gelegen ist, **gekennzeichnet durch** Einwegeingriffsmittel (40) angepasst um als Reaktion auf die Bewegung des Zahnriemens in einer bevorzugten Richtung (61) außer Eingriff zu bleiben und als Reaktion auf die Bewegung des Zahnriemens in der anderen Richtung (60) einzugreifen, wobei der Einwegeingriff Eingriff der ersten beweglichen Mittel mit den zweiten beweglichen Mitteln verursacht, wobei das zweite bewegliche Mittel die erste Stelle und die ersten beweglichen Mittel zu dem Zahnriemen bewegt.

2. Automatische Zahnriemenspannvorrichtung nach Anspruch 1, wobei das erste bewegliche Mittel eine mit dem Zahnriemen (18) in Kontakt zu bringende Riemenscheibe (52) umfaßt, wobei die Riemenscheibe rund die eine erste Achse (53) an der Riemenscheibemitte umfassende erste Stelle drehbar ist, und das zweite bewegliche Mittel eine die Riemenscheibe rund die erste Achse unterstützende und rund die eine zweite Achse (51) umfassende zweite Stelle drehbare exzentrische Armstruktur (49) umfaßt, wobei die zweite Achse auf Abstand von der ersten Achse gelegen ist, **gekennzeichnet durch** Einwegeingriffsmittel (40) angepasst um mit Drehung der Riemenscheibe in einer bevorzugten Richtung außer Eingriff zu bleiben und mit der Drehung der Riemenscheibe in der anderen Richtung einzugreifen, wobei der Einwegeingriff Eingriff der Riemenscheibe mit der exzentrischen Armstruktur verursacht, wobei die exzentrische Armstruktur die erste Drehachse und Riemenscheibe zu dem Zahnriemen bewegt.

3. Automatische Zahnriemenspannvorrichtung nach Anspruch 1, wobei das erste bewegliche Mittel eine rund die eine erste Achse (53) umfassende erste Stelle drehbare Riemenscheibe (52) umfaßt, die angepasst ist um sich mit einem Zahnriemen (18) in Kontakt zu setzen und wobei das zweite bewegliche Mittel eine rund die eine auf Abstand von der ersten Achse gelegene zweite Achse (51) umfassende zweite Stelle drehbare exzentrische Armstruktur (49) umfaßt, wobei die exzentrische Armstruktur die Riemenscheibe rund die erste Achse unterstützt und angepasst ist um die erste Achse und Riemenscheibe während einer bevorzugten Drehung der Riemenscheibe zu dem Zahnriemen zu zwingen **gekennzeichnet durch** eine Einwegkupplung (40) zwischen der Riemenscheibe und der exzentrischen Armstruktur, wobei die Einwegkupplung als Reaktion auf die andere Drehung der Riemenscheibe einzugreifen ist, wodurch die exzentrische Armstruktur gedreht wird um die erste Achse und Riemenscheibe zu dem Zahnriemen zu bewegen.

4. Automatische Zahnriemenspannvorrichtung nach Anspruch 1, wobei das erste bewegliche Mittel eine rund die eine erste Achse (53) umfassende erste Stelle drehbare Riemenscheibe (52) umfaßt, die angepasst ist um sich mit einem Zahnriemen in Kontakt zu setzen, und wobei das zweite bewegliche Mittel eine rund die eine auf Abstand von der ersten Achse gelegene zweite Achse (51) umfassende zweite Stelle drehbare exzentrische Armstruktur (49) umfaßt, wobei die exzentrische Armstruktur die Riemenscheibe rund die erste Achse unterstützt und angepasst ist um die erste Achse und Riemenscheibe während einer bevorzugten Drehung der Riemenscheibe zu dem Zahnriemen zu zwingen **gekennzeichnet durch** eine Einwegkupplung (40) und ein Rädergetriebe (81) zwischen der Riemenscheibe und exzentrischen Armstruktur, wobei die Einwegkupplung und das Rädergetriebe als Reaktion auf die andere Drehung der Riemenscheibe einzugreifen sind, wodurch das Rädergetriebe die exzentrische Armstruktur dreht, um die erste Achse und Riemenscheibe zu dem Zahnriemen zu bewegen.

5. Automatische Zahnriemenspannvorrichtung nach Anspruch 4, **dadurch gekennzeichnet, daß** die Einwegkupplung und das Rädergetriebe zumindest eine Klinke und ein Klinkenrad (44) umfassen, wobei das Klinkenrad ein erstes Zahnrad (45) umfaßt,
ein zweites Zahnrad (81) im Eingriff mit dem ersten Zahnrad und drehbar rund eine feste dritte Achse (80) und Zahnradzähne (46) auf der exzentrischen Armstruktur, wobei die Zahnradzähne mit dem zweiten Zahnrad im Eingriff sind.

6. Automatische Zahnriemenspannvorrichtung nach Anspruch 1, wobei das erste bewegliche Mittel eine rund die eine erste Achse (51) umfassende erste Stelle drehbare Riemenscheibe (52) umfaßt, die angepasst ist um sich mit einem Zahnriemen (18) in Kontakt zu setzen, und wobei das zweite bewegliche Mittel eine rund die eine auf Abstand von der ersten Achse gelegene zweite Achse (92) umfassende zweite Stelle drehbare exzentrische Armstruktur (49) umfaßt, wobei die exzentrische Armstruktur die Riemenscheibe rund die erste Achse stützt, und hydraulische Mittel (100) angepasst um die erste Achse und Riemenscheibe während einer bevorzugten Drehung der Riemenscheibe zu dem Zahnriemen zu zwingen, **gekennzeichnet durch** eine Einwegkupplung (40) zwischen der Riemenscheibe und der exzentrischen Armstruktur, und wobei die zweite Achse auf Abstand jenseits der Peripherie der Riemenscheibe gelegen ist, wobei die Einwegkupplung als Reaktion auf die andere Drehung der Riemenscheibe einzugreifen ist, wodurch die exzentrische Armstruktur gedreht wird um die erste Achse und Riemenscheibe zu dem Zahnriemen zu bewegen und die exzentrische Armstruktur von den hydraulischen Mitteln abzubewegen.

7. Automatische Zahnriemenspannvorrichtung nach Anspruch 6, **dadurch gekennzeichnet, daß** die exzentrische Armstruktur einen hydraulischen Antrieb eingreift (110).

8. Automatische Zahnriemenspannvorrichtung nach Anspruch 3 oder 7, **dadurch gekennzeichnet, daß** die Einwegkupplung zumindest eine Klinke (40) und ein Klinkenrad (42) umfaßt.

9. Automatische Zahnriemenspannvorrichtung nach einem der Ansprüche 3-7, **dadurch gekennzeichnet, daß** die Einwegkupplung diametral kleiner ist als der Diameter der Riemenscheibe.

## Revendications

1. Tendeur automatique de courroie de distribution comprenant des premiers moyens mobiles (52) pouvant être au contact d'une courroie de distribution (18) et, en réponse à la direction du mouvement de la courroie de distribution, mobiles par rapport à un premier emplacement (55), des seconds moyens mobiles (49) supportant les premiers moyens mobiles et le premier emplacement, lesdits seconds moyens mobiles étant mobiles par rapport à un second emplacement (51), et ledit second emplacement étant espacé du premier emplacement,
**caractérisé par** des moyens d'enclenchement unidirectionnel (40) adaptés pour rester non enclenchés en réponse au mouvement de la courroie de distribution dans un sens préféré (61) et pour s'enclencher en réponse au mouvement de la courroie de distribution dans l'autre sens (60), ledit enclenchement unidirectionnel provoquant l'enclenchement des premiers moyens mobiles avec les seconds moyens mobiles, grâce à quoi les seconds moyens mobiles déplacent le premier emplacement et les premiers moyens mobiles vers la courroie de distribution.

2. Tendeur automatique de courroie de distribution selon la revendication 1, dans lequel les premiers moyens mobiles comprennent une poulie (52) pouvant être au contact de la courroie de distribution (18), ladite poulie pouvant être en rotation autour du premier emplacement comprenant un premier axe (53) au niveau du centre de la poulie, et les seconds moyens mobiles comprennent une structure de bras excentrique (49) supportant la poulie autour du premier axe et pouvant être en rotation autour du second emplacement comprenant un deuxième axe (51), ledit deuxième axe étant espacé du premier axe,
**caractérisé par** des moyens d'enclenchement unidirectionnel (40) adaptés pour rester non enclenchés par rotation de la poulie dans un sens préféré, et pour s'enclencher par rotation de la poulie dans l'autre sens, ledit enclenchement unidirectionnel provoquant l'enclenchement de la poulie avec la structure de bras excentrique, grâce à quoi la structure de bras excentrique déplace le premier axe de rotation et la poulie vers la courroie de distribution.

3. Tendeur automatique de courroie de distribution selon la revendication 1, dans lequel les premiers moyens mobiles comprennent une poulie (52) pouvant être en rotation autour du premier emplacement comprenant un premier axe (53), et adaptée pour venir au contact d'une courroie de distribution (18), et les seconds moyens mobiles comprennent une structure de bras excentrique (49) pouvant être en rotation autour du second emplacement comprenant un deuxième axe (51) espacé du premier axe, ladite structure de bras excentrique supportant la poulie autour du premier axe, et adaptée pour pousser le premier axe et la poulie vers la courroie de distribution au cours d'une rotation préférée de la poulie,
**caractérisé par** un accouplement unidirectionnel (40) entre la poulie et la structure de bras excentrique, ledit accouplement unidirectionnel pouvant être enclenché en réponse à l'autre rotation de la poulie, provoquant ainsi la rotation de la structure de bras excentrique, pour déplacer le premier axe et la poulie vers la courroie de distribution.

4. Tendeur automatique de courroie de distribution selon la revendication 1, dans lequel les premiers moyens mobiles comprennent une poulie (52) pouvant être en rotation autour du premier emplacement comprenant un premier axe (53), et adaptée pour venir au contact d'une courroie de distribution, et les seconds moyens mobiles comprennent une structure de bras excentrique (49) pouvant être en rotation autour du second emplacement comprenant un deuxième axe (51) espacé du premier axe, ladite structure de bras excentrique supportant la poulie autour du premier axe, et adaptée pour pousser le premier axe et la poulie vers la courroie de distribution, au cours d'une rotation préférée de la poulie,
**caractérisé par** un accouplement unidirectionnel (40) et par un train d'engrenages (81) placé entre la poulie et la structure de bras excentrique, ledit accouplement unidirectionnel et le train d'engrenages pouvant être enclenchés en réponse à l'autre rotation de la poulie, ayant ainsi pour effet que le train d'engrenages fait tourner la structure de bras excentrique, pour déplacer le premier axe et la poulie vers la courroie de distribution.

5. Tendeur automatique de courroie de distribution selon la revendication 4, **caractérisé en ce que** l'accouplement unidirectionnel et le train d'engrenages comprennent au moins un cliquet et une roue à rochet (44), ladite roue à rochet comprenant :
- un premier engrenage (45),
- un second engrenage (81) engrené avec le premier engrenage et pouvant être en rotation autour d'un troisième axe fixe (80), et
- des dents d'engrenages (46) placées sur la structure de bras excentrique, lesdites dents d'engrenages étant engrenées avec le second engrenage.

6. Tendeur automatique de courroie de distribution selon la revendication 1, dans lequel les premiers moyens mobiles comprennent une poulie (52) pouvant être en rotation autour du premier emplacement comprenant un premier axe (51), et adaptée pour venir au contact d'une courroie de distribution (18), et les seconds moyens mobiles comprennent une structure de bras excentrique (49) pouvant être en rotation autour du second emplacement comprenant un deuxième axe (92) espacé du premier axe, ladite structure de bras excentrique supportant la poulie autour du premier axe, et des moyens hydrauliques (100) adaptés pour pousser le premier axe et la poulie vers la courroie de distribution, au cours d'une rotation préférée de la poulie,
**caractérisé par** un accouplement unidirectionnel (40) se produisant entre la poulie et la structure de bras excentrique, le deuxième axe étant espacé au-delà de la périphérie de la poulie, ledit accouplement unidirectionnel pouvant être enclenché en réponse à l'autre rotation de la poulie, provoquant ainsi la rotation de la structure de bras excentrique, pour déplacer le premier axe et la poulie vers la courroie de distribution, et éloigner la structure de bras excentrique, des moyens hydrauliques.

7. Tendeur automatique de courroie de distribution selon la revendication 6, **caractérisé en ce que** la structure de bras excentrique enclenche un actionneur hydraulique (110).

8. Tendeur automatique de courroie de distribution selon la revendication 3 ou 7, **caractérisé en ce que** l'accouplement unidirectionnel est un encliquetage comprenant au moins un cliquet (40) et une roue à rochet (42).

9. Tendeur automatique de courroie de distribution selon l'une quelconque des revendications 3 à 7, **caractérisé en ce que** l'accouplement unidirectionnel est diamétralement inférieur au diamètre de la poulie.
